# EUROPÄISCHE PATENTSCHRIFT

(11) **EP 1 071 858 B1**
(45) Veröffentlichungstag und Bekanntmachung des Hinweises auf die Patenterteilung: **03.07.2002**
(21) Anmeldenummer: 99924704.2
(22) Anmeldetag: 27.03.1999
(51) Int. Cl.: E05B 47/06, E05B 49/00

(54) **SCHLÜSSELLOSES ZUGANGSSYSTEM FÜR FAHRZEUGE**
KEYLESS ACCESS SYSTEM FOR VEHICLES
SYSTEME D'ACCES SANS CLE POUR DES VEHICULES

(30) Priorität: 15.04.1998 DE 19816603
(43) Veröffentlichungstag der Anmeldung: 31.01.2001
(73) Patentinhaber: ROBERT BOSCH GMBH, 70442 Stuttgart (DE)
(72) Erfinder: HAULER, Peter, 76275 Ettlingen (DE); WEISS, Karl-Ernst, 76275 Ettlingen (DE); FEUCHTER, Uwe, 70563 Stuttgart (DE); SCHROFF, Clemens, 76698 Ubstadt-Weiher (DE); MATHONY, Hans-Joerg, 71732 Tamm-Hohenstange (DE); SPICHALE, Thomas, 69436 Schönbrunn (DE); HUGEL, Robert, 76199 Karlsruhe (DE); SCHMITZ, Stephan, 50672 Köln (DE)
(86) Internationale Anmeldenummer: DE9900931
(87) Internationale Veröffentlichungsnummer: WO9953162

(56) Entgegenhaltungen:
- EP-A- 0 831 194
- WO-A-98/04799
- DE-A- 4 228 233
- DE-A- 4 435 894

## Beschreibung

### Stand der Technik

Die Erfindung betrifft ein schlüsselloses Zugangssystem für Fahrzeuge, bei dem ein Identifikations-Steuergerät im Fahrzeug und ein tragbarer Transponder über die Bewegung eines Türgriffes einen Frage-Antwort-Dialog einleiten, in dem die Berechtigung zum Entriegeln der Fahrzeugtür überprüft wird und bei dem nur bei festgestellter Berechtigung die Entriegelung der Fahrzeugtür freigegeben und durchgeführt wird.

Ein derartiges Zugangssystem ist aus der DE 35 36 377 A1 bekannt. Dabei wird der Türgriff in zwei entgegengesetzten Richtungen verstellt, um den Entriegelungs- oder den Verriegelungsvorgang einzuleiten. Sind den Fahrzeugtüren Elel<troschlösser zugeordnet, dann sind die Türgriffe und die Schloßstellelemente nicht mechanisch miteinander verbunden, so daß auch bei Verwendung einer Zentralverriegelung der Entriegelungsvorgang unabhängig von der Verstellung des Türgriffes vollzogen werden kann.

Werden den Fahrzeugtüren jedoch konventionelle, mechanische Türschlösser zugeordnet, dann stehen Türgriff und Türschloß in mechanischer Wirkverbindung. Wird die Identifikationsabfrage zum Entriegeln durch Betätigen des Türgriffes eingeleitet, dann muß der Türgriff in der Regel noch einmal losgelassen werden, damit der von der Zentralverriegelung gesteuerte Mechanismus zur Entriegelung greifen kann. Erst dann kann durch das erneute Betätigen des Türgriffes die Fahrzeugtür geöffnet werden. Die Verwendung von konventionellen, mechanischen Türschlössern mit Zentralverriegelung bedingt daher eine abweichende Bedienung der Türgriffe beim Öffnen der Fahrzeugtür.

Es ist Aufgabe der Erfindung, ein Zugangssystem der eingangs erwähnten Art zu schaffen, das sowohl bei Elektroschlössern als auch bei konventionellen, mechanischen Türschlössern mit Zentralverriegelung eingesetzt werden kann, ohne ein nochmaliges mechanisches Betätigen des Türgriffes zum Öffnen der Fahrzeugtür vornehmen zu müssen.

Die Erfindung bezieht sich nur auf den Entriegelungs- bzw. Öffnungsvorgang der Fahrzeugtür. Der Verriegelungsvorgang kann über einen getrennten Taster oder durch die Bewegung des Türgriffes in eine andere, vorzugsweise in die zur Öffnung der Tür entgegengesetzte Richtung eingeleitet und bewirkt werden.

Die Aufgabe der Erfindung wird zum einen dadurch gelöst, daß der Fahrzeugtür ein Elektroschloß mit Schloßelektronik und Schloßmotor zugeordnet ist, daß die Verstellung des Türgriffes in zwei Abschnitte unterteilt ist, daß im ersten Abschnitt über einen vom Türgriff steuerbaren Ansteuerschalter das Identifikations-Steuergerät zur Einleitung des Frage-Antwort-Dialoges ansteuerbar ist, daß der Übergang des Türgriffes vom ersten Abschnitt in den zweiten Abschnitt mittels eines Blockierelementes solange verhindert oder erschwert ist, bis die Berechtigung zum Entriegeln der Fahrzeugtür festgestellt und zur Durchführung freigegeben ist, und daß im zweiten Abschnitt nach der Freigabe des Blockierelementes und der Schloßelektronik durch das Identifikations-Steuergerät über einen vom Türgriff steuerbaren Befehlsschalter die Entriegelung der Fahrzeugtür einleitbar und durch den Schloßmotor durchführbar ist und zum anderen dadurch, daß der Fahrzeugtür ein mechanisches Türschloß mit Zentralverriegelung und Schloßstellelement zugeordnet ist, daß die Verstellung des Türgriffes in zwei Abschnitte unterteilt ist, daß im ersten Abschnitt über einen vom Türgriff steuerbaren Ansteuerschalter das Identifikations-Steuergerät zur Einleitung des Frage-Antwort-Dialoges ansteuerbar ist, daß der Übergang des Türgriffes vom ersten Abschnitt in den zweiten Abschnitt mittels eines Blockierlementes solange verhindert oder erschwert ist, bis die Berechtigung zum Entriegeln der Fahrzeugtür festgestellt und zur Durchführung freigegeben ist, und daß im zweiten Abschnitt nach der Freigabe des Blockierelementes und der Zentralverriegelung durch das Identifikations-Steuergerät über eine mechanische Wirkverbindung vom Türgriff auf das Schloßstellelement sich der Öffnungsvorgang der Fahrzeugtür durchführen läßt.

Daraus ist zu sehen, daß sowohl beim Einsatz eines Elektroschlosses als auch beim Einsatz eines mechanischen Türschlosses mit Zentralverriegelung der Betätigungsablauf des Türgriffes in gleicher Weise, d.h. in zwei Abschnitten erfolgt, wobei der Übergang vom ersten Abschnitt in den zweiten Abschnitt vom Ergebnis des entsprechenden Frage-Antwort-Dialogs abhängig gemacht ist. Der Türgriff wird wie gewohnt nur einmal gefaßt und in einer Bewegungsrichtung betätigt, wobei der Benutzer das Ende des ersten Abschnittes des Verstellweges erkennt und die Betätigung fortsetzt, wenn das Blockierelement die weitere Verstellung des Türgriffes freigibt. Die Betätigungszeit des Türgriffes wird dadurch nur unerheblich vergrößert, da der Frage-Antwort-Dialog und die Steuerung des Blockierelementes nur kurze Zeit in Anspruch nehmen. Die von dem Ansteuerschalter bzw. dem Befehlsschalter abgegebenen Steuersignale können für die unterschiedlichen Schattfunktionen eines Elektroschlosses oder eines mechanischen Türschlosses mit Zentralverriegelung verwendet werden und zwar durch die Ansteuerung der angegebenen Schloßkomponenten.

Ist die Ableitung der Steuersignale so vorgenommen, daß der Ansteuerschalter beim Verlassen der Ausgangsstellung des Türgriffes und der Befehlsschalter nach Überschreiten der Position des freigegebenen Blockierelementes durch den Türgriff ansteuerbar sind und Steuersignale an das Identifikations-Steuergerät und die Schloßelektronik abgegeben werden, dann können in der Ausgangsstellung des Türgriffes auch die elektrischen Schloßkomponenten und das Blockierelement stromlos gehalten werden, wenn zudem vorgesehen ist, daß der Ansteuerschalter und der Befehlsschalter in der Ausgangsstellung vorzugsweise geöffnet sind.

Nach einer Ausgestaltung ist vorgesehen, daß das Blockierelement als Sperrvorrichtung mit einem in den Verstellweg des Türgriffes ragendes Sperrglied ausgebildet ist, wobei das Sperrglied die Verstellung in die beiden Abschnitte unterteilt. Die beiden Abschnitte des Verstellweges des Türgriffes sind bei dieser Ausgestaltung eindeutig voneinander getrennt und der Übergang in den zweiten Abschnitt kann auch nicht durch erhöhte Kraftaufwendung erzwungen werden.

Die Erfindung wird anhand von in den Zeichnungen schematisch dargestellten Ausführungsbeispielen näher erläutert. Es zeigen:
- Fig. 1: das Zugangssystem nach der Erfindung mit einem Elektroschloß und
- Fig. 2: das Zugangssystem nach der Erfindung mit einem mechanischen Türschloß mit Zentralverriegelung.

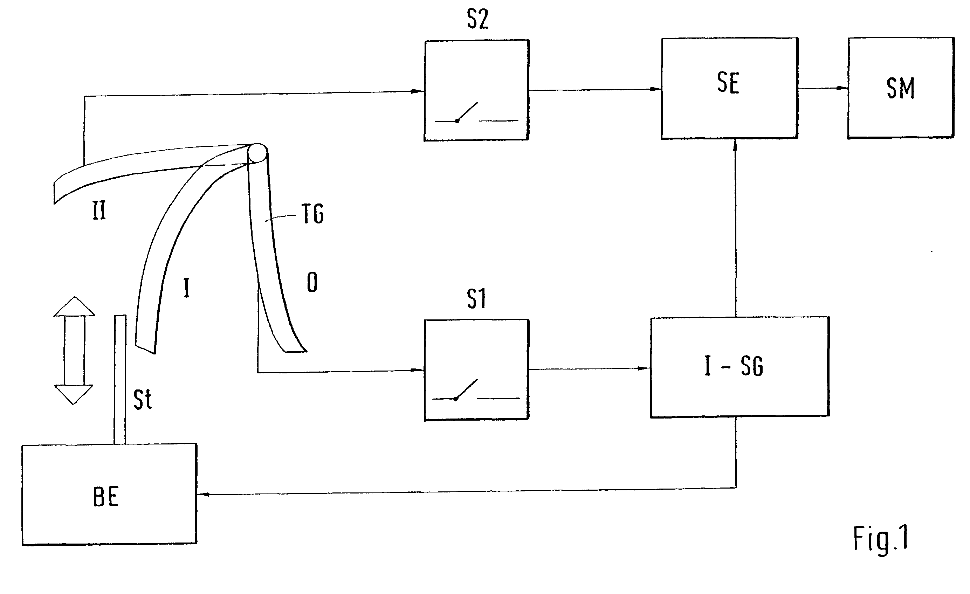

Wie in Fig. 1 schematisch dargestellt ist, kann der Türgriff TG der Fahrzeugtür verschiedene Stellungen einnehmen. Der Verstellweg umfaßt zwei Abschnitte 0 bis I und I bis II, wobei mit 0 die Ausgangsstellung, mit I eine blockierte Stellung und mit II die Endstellung gekennzeichnet sind. Der gesamte Verstellweg kann nur durchgeführt werden, wenn ein in den Verstellweg des Türgriffes TG ragendes Sperrglied St eines als Sperrvorrichtung ausgebildeten Blockierelementes BE aus dem Verstellbereich des Türgriffes TG entfernt ist. Das Sperrglied St definiert daher den Übergang zwischen dem ersten Abschnitt 0 bis I und dem zweiten Abschnitt I bis II des Verstellweges.

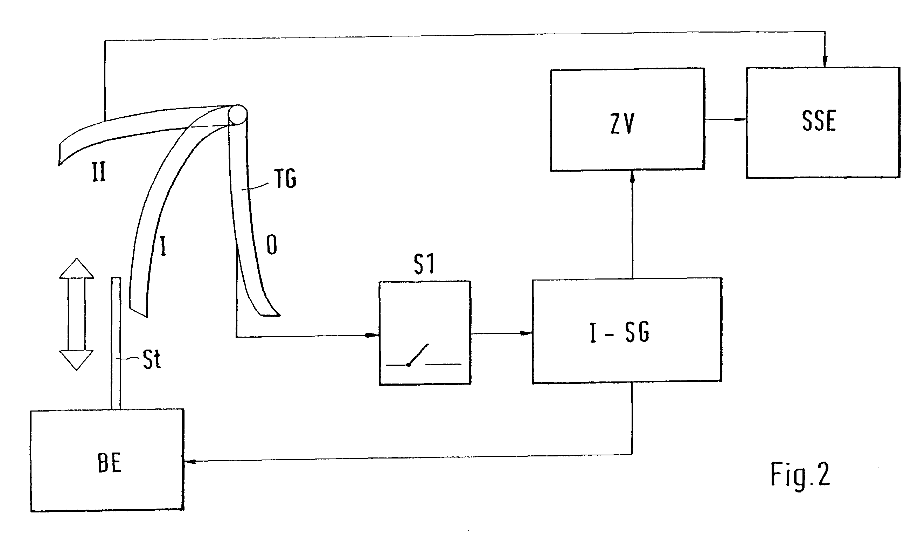

Die Betätigung des Türgriffes TG erfolgt nun in der Weise, daß er zunächst bis zum Anschlag an dem Sperrglied St verstellt wird und erst nach Freigabe durch das Blockierelement BE in seine Endstellung II gebracht werden kann. Dieser Betätigungsablauf des Türgriffes TG ist unabhängig von der Verwendung eines bestimmten Schloßtypes, wie anhand der Fig. 1 und 2 gezeigt wird.

Bei der Ausführung des Zugangssystems nach Fig. 1 ist ein Elektroschloß mit Schloßelektronik SE und Schloßmotor SM eingesetzt.

Auf den Frage-Antwort-Dialog zwischen einem im Fahrzeug untergebrachten Identifikations-Steuergerät I-SG und einem nicht dargestellten tragbaren Transponder braucht hier nicht näher eingegangen zu werden, da es für deren Ausgestaltung und Betriebsweise verschiedene bekannte Lösungen gibt, die alle mit dem vorliegenden Zugangssystem zusammenarbeiten können.

Der Türgriff TG steuert einen Ansteuerschalter S1 und einen Befehlsschalter S2. Der Ansteuerschalter S1 wird angesteuert, wenn der Türgriff TG seine Ausgangsstellung 0 verläßt. Dabei gibt der Ansteuerschalter S1 ein Steuersignal an das Identifikations-Steuergerät I-SG ab. Im Ausgangszustand nimmt der Ansteuerschalter S1 vorzugsweise die Öffnungsstellung ein und schließt erst, wenn der Türgriff TG seine Ausgangsstellung 0 verläßt. Die Nutzung des Schalterzustands für Zwecke des Schaltens der Betriebsspannung hat den zusätzlichen Vorteil, daß im Ausgangszustand auch das Identifikations-Steuergerät I-SG und das Blockierelement BE stromlos gehalten werden können. Ist der Frage-Antwort-Dialog zwischen dem Identifikations-Steuergerät I-SG und dem Transponder positiv abgelaufen, d.h. die Berechtigung zum Entriegeln der Fahrzeugtür festgestellt, dann steuert das Identifikations-Steuergerät I-SG das Blockierelement BE und die Schfoßelektronilc SE an und gibt damit die Entriegelung frei.

Das Sperrglied St des Blockierelementes BE wird aus dem Verstellbereich des Türgriffes TG gebracht, so daß dieser in seine Endstellung II verstellt werden kann. Befindet sich der Türgriff TG zwischen I und der Endstellung II, dann wird der Befehlsschalter S2 angesteuert, der ein Steuersignal an die Schloßelektronik SE weiterleitet, die ja vom Identifikations-Steuergerät I-SG bereits eine Freigabe erhalten hat. Die Schloßelektronik SE veranlaßt dann über den Schloßmotor SM die Freigabe der Drehfalle.

Ist, wie Fig. 2 zeigt, ein mechanisches Türschloß mit Zentralverriegelung ZV und Schloßstelleinrichtung SSE eingesetzt, dann gibt das Identifikations-Steuergerät I-SG wie beim Elektroschloß das Blockierelement BE frei. Zudem wird die Zentralverriegelung ZV eine mechanische Wirkverbindung zur Sperrklinke herstellen.

Über die mechanische Wirkverbindung wird dann durch Bewegen des Türgriffes TG in die Endstellung II die Drehfalle freigegeben und durch Ziehen am Türgriff kann die Fahrzeugtür geöffnet werden.

Das gezeigte Beispiel eines als Sperrvorrichtung ausgebildeten Blockierelementes BE darf nicht als Beschränkung des Erfindungsgedankens ausgelegt werden. Es sind andere konstruktive Ausgestaltungen möglich. Es kommt lediglich darauf an, den Übergang vom ersten in den zweiten Abschnitt des Verstellweges solange zu verhindern oder zu erschweren, bis der Frage-Antwort-Dialog erfolgreich abgeschlossen ist und das Identifikations-Steuergerät I-SG das Blockierelement BE ansteuert und die weitere Verstellung des Türgriffes TG freigibt.

## Patentansprüche

1. Schlüsselloses Zugangssystem für ein Fahrzeug, bei dem ein Identifikations-Steuergerät im Fahrzeug und ein tragbarer Transponder durch die Betätigung eines Türgriffes eingeleitet einen Frage-Antwort-Dialog durchführen, in dem die Berechtigung zum Entriegeln der Fahrzeugtür überprüft wird und bei dem nur bei festgestellter Berechtigung die Entriegelung der Fahrzeugtür freigegeben und durchgeführt wird,
**dadurch gekennzeichnet,**
**daß** der Fahrzeugtür ein Elektroschloß mit Schloßelektronik (SE) und Schloßmotor (SM) zugeordnet ist,
**daß** die Verstellung des Türgriffes (TG) in zwei Abschnitte (0 bis I und I bis II) unterteilt ist,
**daß** im ersten Abschnitt (0 bis I) über einen vom Türgriff (TG) steuerbaren Ansteuerschalter (S1) das Identifikations-Steuergerät (I-SG) zur Einleitung des Frage-Antwort-Dialoges ansteuerbar ist,
**daß** der Übergang des Türgriffes (TG) vom ersten Abschnitt (0 bis I) in den zweiten Abschnitt (I bis II) mittels eines Blockierelementes (BE) solang verhindert oder erschwert ist, bis die Berechtigung zum Entriegeln der Fahrzeugtür festgestellt und zur Durchführung freigegeben ist, und
**daß** im zweiten Abschnitt (I bis II) nach der Freigabe des Blockierelementes (BE) und der Schloßelektronik (SE) durch das Identifikations-Steuergerät (I-SG) über einen vom Türgriff (TG) steuerbaren Befehlsschalter (S2) die Freigabe der Drehfalle der Fahrzeugtür einleitbar und durch den Schloßmotor (SM) durchführbar ist.

2. Schlüsselloses Zugangssystem für ein Fahrzeug, bei dem ein Identifikations-Steuergerät im Fahrzeug und ein tragbarer Transponder durch die Betätigung eines Türgriffes auslöst einen Frage-Antwort-Dialog durchführen, in dem die Berechtigung zum Entriegeln der Fahrzeugtür überprüft wird und bei dem nur bei festgestellter Berechtigung die Entriegelung der Fahrzeugtür freigegeben und durchgeführt wird,
**dadurch gekennzeichnet,**
**daß** der Fahrzeugtür ein mechanisches Türschloß mit Zentralverriegelung (ZV) und Schloßstellelement (SSE) zugeordnet ist,
**daß** die Verstellung des Türgriffes (TG) in zwei Abschnitte (0 bis I und I bis II) unterteilt ist,
**daß** im ersten Abschnitt (0 bis I) über einem vom Türgriff (TG) steuerbaren Ansteuerschalter (S1) das Identifikations-Steuergerät (I-SG) zur Einleitung des Frage-Antwort-Dialoges ansteuerbar ist,
**daß** der Übergang des Türgriffes (TG) vom ersten Abschnitt (0 bis I) in den zweiten Abschnitt (I bis II) mittels eines Blockierlementes (BE) solange verhindert oder erschwert ist, bis die Berechtigung zum Entriegeln der Fahrzeugtür festgestellt und zur Durchführung freigegeben ist, und
**daß** im zweiten Abschnitt (I bis II) nach der Freigabe des Blockierelementes (BE) und der Zentralverriegelung (ZV) durch das Identifikations-Steuergerät (I-SG) über eine mechanische Wirkverbindung vom Türgriff (TG) auf das Schloßstellelement (SSE) sich der Öffnungsvorgang der Fahrzeugtür durchführen läßt.

3. Schlüsselloses Zugangssystem nach Anspruch 1,
**dadurch gekennzeichnet,**
**daß** der Ansteuerschalter (S1) beim Verlassen der Ausgangsstellung (O) des Türgriffes (TG) und der Befehlsschalter (S2) beim Erreichen der Endstellung (II) des Türgriffes (TG) ansteuerbar sind und Steuersignale an das Identifikations-Steuergerät (I-SG) und die Schloßelektronik (SE, Fig. 1) abgegeben.

4. Schlüsselloses Zugangssystem nach Anspruch 3,
**dadurch gekennzeichnet,**
**daß** der Ansteuerschalter (S1) beim Verlassen der Ausgangsstellung (O) des Türgriffes (TG) ansteuerbar ist und
**daß** über die Bewegung des Türgriffes (TG) von der blockierten Stellung (I) in die Endstellung (II) der Öffnungsvorgang über den mechanischen Wirkeingriff auf das Schloßstellelement (SSE) durchführbar ist (Fig. 2).

5. Schlüsselloses Zugangssystem nach Anspruch 1,
**dadurch gekennzeichnet,**
**daß** der Ansteuerschalter (S1) und der Befehlsschalter (S2) in der Ausgangsstellung vorzugsweise geöffnet sind.

6. Schlüsselloses Zugangssystem nach Anspruch 2,
**dadurch gekennzeichnet,**
**daß** der Ansteuerschalter (S1) in der Ausgangsstellung vorzugsweise geöffnet ist.

7. Schlüsselloses Zutrittssystem nach einem der Ansprüche 1 bis 4,
**dadurch gekennzeichnet,**
**daß** das Blockierelement (BE) als Sperrvorrichtung mit einem in den Verstellweg des Türgriffes (TG) ragenden Sperrglied (St) ausgebildet ist, wobei das Sperrglied den Verstellweg in die beiden Abschnitte (0 bis I und I bis II) unterteilt.

## Claims

1. Keyless access system for a vehicle, in which an identification controller in the vehicle and a portable transponder carry out a question and answer dialogue initiated by operating a door handle, during which the authorization to unlock the vehicle door is checked, and during which the unlocking of the vehicle door is enabled and is carried out only if authorization is confirmed,
**characterized**
**in that** the vehicle door has an associated electrical lock with lock electronics (SE) and a lock motor (SM),
**in that** the movement of the door handle (TG) is subdivided into two sections (0 to I and I to II),
**in that**, in the first section (0 to I), the identification controller (I-SG) can be actuated in order to initiate the question and answer dialogue via an actuation switch (S1) which can be controlled by the door handle (TG),
**in that** the transition of the door handle (TG) from the first section (0 to I) to the second section (I-II) is prevented or made more difficult by means of a blocking element (BE) until the authorization to unlock the vehicle door is confirmed and is allowed to be carried out, and
**in that**, in the second section (I to II), once the blocking element (BE) and the lock electronics (SE) have been released, the release of the rotary catches of the door handle can be initiated by the identification controller (I-SG) via a command switch (S2) which can be controlled by the door handle (TG), and this process can be carried out by the lock motor (SM).

2. Keyless access system for a vehicle, in which an identification controller in the vehicle and a portable transponder carry out a question and answer dialogue initiated by operating a door handle, during which the authorization to unlock the vehicle door is checked, and during which the unlocking of the vehicle door is enabled and is carried out only if authorization is confirmed,
**characterized**
**in that** the vehicle door has an associated mechanical door lock with central locking (ZV) and a lock control element (SSE),
**in that** the movement of the door handle (TG) is subdivided into two sections (0 to I and I to II),
**in that** in the first section (0 to I), the identification controller (I-SG) can be actuated in order to initiate the question and answer dialogue via an actuation switch (S1) which can be controlled by the door handle (TG),
**in that** the transition of the door handle (TG) from the first section (0 to I) to the second section (I-II) is prevented or made more difficult by means of a blocking element (BE) until the authorization to unlock the vehicle door is confirmed and is allowed to be carried out, and
**in that**, in the second section (I to II), after the release of the blocking element (BE) and of the central locking (ZV), the process of opening the vehicle door can be carried out by the identification controller (I-SG) via a mechanical operative connection from the door handle (TG) to the lock control element (SSE).

3. Keyless access system according to Claim 1,
**characterized**
**in that** the actuation switch (S1) can be actuated when the door handle (TG) leaves the original position (0) and the command switch (S2) can be actuated when the door handle (TG) reaches the limit position (II) and control signals are emitted to the identification controller (I-SG) and to the lock electronics (SE, Fig. 1).

4. Keyless access system according to Claim 3,
**characterized**
**in that** the actuation switch (S1) can be actuated when the door handle (TG) leaves the original position (0), and
**in that** the opening process can be carried out via the mechanical effective action on the lock control element (SSE) via the movement of the door handle (TG) from the blocked position (I) to the limit position (II). (Figure 2).

5. Keyless access system according to Claim 1,
**characterized**
**in that** the actuation switch (S1) and the command switch (S2) are preferably open in the original position.

6. Keyless access system according to Claim 2,
**characterized**
**in that** the actuation switch (S1) is preferably open in the original position.

7. Keyless access system according to one of Claims 1 to 4,
**characterized**
**in that** the blocking device (BE) is in the form of a blocking apparatus having a blocking member (St) which projects into the movement path of the door handle (TG), with the blocking member subdividing the movement path into the two sections (0 to I and I to II).

## Revendications

1. Système d'accès sans clé pour un véhicule, selon lequel un appareil de commande/identification du véhicule et un transpondeur mobile effectuent un dialogue question - réponse lors de l'actionnement de la poignée de la porte, pour vérifier l'autorisation de déverrouiller la porte du véhicule le déverrouillage de la porte du véhicule est libéré et peut être effectué, seulement lorsque l'autorisation est constatée
**caractérisé en ce que**
la porte du véhicule comporte une serrure électrique avec une électronique de serrure (SE) et un moteur de serrure (SM),
la manoeuvre de la poignée de porte (TG) est subdivisée en deux segments (0-I) et (I-II), dans le premier segment (O-I) le commutateur de commande (S1) commandé à partir de la poignée de porte (TG) commande l'appareil de commande/identification (I-SG) pour commencer le dialogue question - réponse, le passage de la poignée de porte (TG) du premier segment (0-I) dans le second segment (I-II) à l'aide de l'élément de blocage (BE) est interdit ou compliqué jusqu'à ce que l'autorisation de déverrouillage de la porte du véhicule soit constatée et soit libérée pour être exécutée et,
dans le second segment (I-II) après la libération de l'élément de blocage (BE) et de l'électronique de serrure (SE) par l'appareil de commande/identification (I-SG) par un commutateur d'ordre (S2) commandé à partir de la poignée (TG), on commence la libération de la gâche de la porte du véhicule et on effectue celle-ci à l'aide du moteur de serrure (SM).

2. Système d'accès sans clé d'un véhicule selon lequel un appareil de commande/identification équipant le véhicule et un transpondeur mobile déclenchent, par l'actionnement d'une poignée de porte, un dialogue question - réponse dans lequel on vérifie l'autorisation de déverrouiller la poignée de porte, et le déverrouillage de la porte de véhicule est libéré et peut être effectué, seulement lorsque l'autorisation est constatée,
**caractérisé en ce que**
la porte du véhicule comporte une serrure mécanique avec un verrouillage centralisé (ZV) et des éléments de serrure (SSE),
l'actionnement de la poignée de porte (TG) est subdivisé en deux segments (0-I) et (I-II),
dans le premier segment (0-I), un commutateur de commande (S1) commandé par la poignée de porte (TG) commande l'appareil de commande/identification (I-SG) pour commencer le dialogue question - réponse, le passage de la poignée de porte (TG) du premier segment (0-I) dans le second segment (I-II) est interdit ou rendu difficile par un élément de blocage (BE) jusqu'à ce que l'autorisation de déverrouiller la porte du véhicule soit constatée et soit libérée pour être exécutée, et
dans le second segment (I-II) après la libération de l'élément de blocage (BE) et du verrouillage central (ZV), l'appareil de commande/identification (I-SG) autorise par une coopération mécanique entre la poignée de porte (TG) et l'élément d'actionnement de serrure (SSE), d'effectuer l'opération d'ouverture de la porte du véhicule.

3. Système d'accès sans clé selon la revendication 1,
**caractérisé en ce que**
le commutateur de commande (S1) est commandé lorsque la poignée de porte (TG) quitte la position de repos et le commutateur d'ordre (S2) est commandé lorsque la poignée (TG) a atteint la position de fin de course (II) et les signaux de commande sont envoyés à l'appareil de commande/identification (I-SG) et l'électronique de serrure (SE, figure 1).

4. Système d'accès sans clé selon la revendication 3,
**caractérisé en ce que**
le commutateur de commande (S1) est commandé lorsque la poignée de porte (TG) quitte la position de repos (0) et
le mouvement de la poignée de porte (TG) entre la position de blocage (I) et la position de fin de course (II) de l'opération d'ouverture se fait par une action mécanique sur l'élément d'actionnement de serrure (SSE) (figure 2).

5. Système d'accès sans clé selon la revendication 1,
**caractérisé en ce que**
le commutateur de commande (S1) et le commutateur d'ordre (S2) sont ouverts de préférence en position de repos.

6. Système d'accès sans clé selon la revendication 2,
**caractérisé en ce que**
le commutateur de commande (S1) est ouvert de préférence en position de repos.

7. Système d'accès sans clé selon l'une des revendications 1 à 4,
**caractérisé en ce que**
l'élément de blocage (BE) est réalisé comme dispositif de verrouillage avec un organe de verrouillage (St) pénétrant dans la course d'actionnement de la poignée de porte (TG),
l'élément de verrouillage subdivisant la course d'actionnement en deux segments (0-I) et (I-II).
